# EUROPÄISCHE PATENTSCHRIFT

(11) **EP 2 452 408 B1**
(45) Veröffentlichungstag und Bekanntmachung des Hinweises auf die Patenterteilung: **31.12.2014**
(21) Anmeldenummer: 10728231.1
(22) Anmeldetag: 02.07.2010
(51) Int. Cl.: H02G 5/00

(54) **MODULARE STROMSCHIENE**
MODULAR BUSBAR
BARRE OMNIBUS MODULAIRE

(30) Priorität: 10.07.2009 DE 102009033465
(43) Veröffentlichungstag der Anmeldung: 16.05.2012
(73) Patentinhaber: Siemens Aktiengesellschaft, 80333 München (DE)
(72) Erfinder: ALEFELDER, Frank, 53819 Neunkirchen-Seelscheid (DE); FRENZEL, Anton, 53840 Troisdorf (DE); PIOTROWSKI, Rene, 04229 Leipzig (DE); WELLNER, Olaf, 08209 Rebesgrün (DE)
(86) Internationale Anmeldenummer: PCT/EP2010/059457
(87) Internationale Veröffentlichungsnummer: WO 2011/003830

(56) Entgegenhaltungen:
- FR-A1- 2 580 123
- US-A- 3 402 254
- US-A- 5 224 575

## Beschreibung

Um innerhalb eines Schienenverteilersystems querschnittsoptimiert arbeiten zu können ist es bisher notwendig, entsprechend der Vielzahl der kundenseitig gewünschten Stromtragfähigkeiten der Schienenverteiler dieses Schienenverteilersystems eine Vielzahl an verschiedenen Stromschienenprofilen zur Verfügung zu haben. Diese Vielzahl an Stromschienenprofilen ist sehr kostenintensiv, da für jedes der Stromschienenprofile Werkzeug- und Logistikkosten anfallen. Zusätzlich sinken durch die Vielzahl der Stromschienenprofile die Losgrößen der einzelnen Stromschienenprofile, was ein Ansteigen der Herstellungskosten zur Folge hat. Zur Senkung der genannten Kosten wurde bisher bei Schienenverteilersystemen das sogenannte "derating" durchgeführt - man hat also bei Baugrößen des Schienenverteilersystems, bei denen nur eine geringe Absatzmenge zu verzeichnen ist, Stromschienenprofile der nächst größeren Baugröße eingesetzt.

Die Erfindung betrifft eine modulare Stromschiene, die aus separaten, als starre Profile ausgebildeten, quer zur Stromrichtung Strom leitend aneinander gefügten Teilstücken besteht.

Die Erfindung betrifft weiterhin ein Schienenverteilersystem mit derartigen modularen Stromschienen und insbesondere eine Baureihe derartiger modularer Stromschienen.

Eine gattungsgemäße modulare Stromschiene in Form einer aus zwei separaten Teilstücken gebildeten hohlen Anschlussschiene für elektrische Geräte und Apparate sowie eine gattungsgemäße Baureihe derartiger modularer Stromschienen sind beispielsweise aus der Patentschrift EP 1 297 547 B1 bekannt. Bei dieser bekannten Baureihe, bei der die verschiedenen modularen Anschlussschienen durch Variation der Dicke des Materials der beiden Teilstücke unterschiedliche Stromtragfähigkeiten aufweisen, bilden die beiden Teilstücke einen Hohlraum, um bei der genannten Variation der Dicke des Materials einen vorgegebenen einheitlichen äußerem Querschnitt einzuhalten.

Eine gattungsgemäße Stromschiene ist auch aus der Druckschrift US 5,224,575 A bekannt. Die dort gezeigte Stromschiene dient zum Antrieb von Schienenfahrzeugen und weist ein erstes Teilstück in Form eines I-förmigen Schienensteges aus Stahl auf, das Strom leitend mit zwei weiteren Teilstücken in Form von Einlagen aus Aluminium verbunden ist. Die Querschnittsfläche dieser Stromschiene weist eine Hüllkontur auf, die aus einem ersten Seitenpaar einander gegenüberliegender Seiten einer die Breite der Stromschiene bildenden ersten Seitenlänge und einem zweiten Seitenpaar einander gegenüberliegender Seiten einer die Höhe der Stromschiene bildenden zweiten Seitenlänge gebildet ist, wobei die Breite der Stromschiene kürzer als die Höhe der Stromschiene ist. Ein sich in Stromrichtung erstreckendes erstes der Teilstücke bildet eine erste Seite des ersten Seitenpaares und jeweils einen sich daran anschließenden ersten Abschnitt der beiden Seiten des zweiten Seitenpaares.

Ausgehend von einer Stromschiene mit den Merkmalen des Oberbegriffes des Patentanspruches 1 (US 5,224,575 A) liegt der Erfindung die Aufgabe zu Grunde, diese insbesondere für den Einsatz in Schienenverteilersystemen zu optimieren.

Gelöst wird diese Aufgabe durch eine gattungsgemäße Stromschiene, bei der ein sich in Stromrichtung im Wesentlichen über die gesamte Länge der Stromschiene erstrecktes zweites der Teilstücke die zweite Seite des ersten Seitenpaares und jeweils einen sich daran anschließenden zweiten Abschnitt der beiden Seiten des zweiten Seitenpaares bildet.

Bevorzugt verlaufen die beiden Seiten des zweiten Seitenpaares, die die Höhe der Stromschiene bilden, geradlinig und - im Abstand der Breite der Stromschiene - parallel zueinander.

Die erfindungsgemäße Stromschiene besteht mit anderen Worten aus Teilstücken, die quer zur Stromrichtung in Reihe aneinandergefügt sind, wobei die beiden Teilstücke, die jeweils ein Ende dieser Reihe bilden, die maximale Breite der Hüllkontur und damit die Breite der Stromschiene vorgeben und zwei sich in Richtung der Höhe der Stromschiene erstreckende Arbeitsflächen, insbesondere zwei im Abstand der Breite der Stromschiene parallel verlaufende Arbeitsebenen bilden.

Eine erfindungsgemäße Baureihe modularer Stromschienen weist zumindest zwei derartige Stromschienen auf, die sich in ihrer Stromtragfähigkeit unterscheiden.

An sich sind weiterhin als Thermobimetalle verwendete Metallstreifen aus zwei Schichten unterschiedlicher Materialien bekannt, bei denen die beiden Schichten an einander zugewandten ihrer breiten Seiten miteinander stoffschlüssig oder formschlüssig verbunden sind. Die Teilungsfuge verläuft also parallel zu den breiten Seiten der beiden Schichten. Charakteristisch ist bei diesen Thermobimetallen die Veränderung der Form bei Temperaturänderung, die sich als Verbiegung äußert und deren Ursache der unterschiedliche Wärmeausdehnungskoeffizient der verwendeten Metalle - beispielsweise Zink und Stahl oder Messing und Stahl - ist (http://de.wikipedia.org/wiki/Bimetall).

Im Unterschied zu derartigen Thermobimetallen bezieht sich die Erfindung jedoch auf modulare Stromschienen, die aus starren Profilen gebildet sind, die an einander zugewandten ihrer schmalen Seiten Strom leitend miteinander verbunden sind und bei denen die Auswahl der Materialien in Hinblick auf die Variation der Stromtragfähigkeit erfolgt.

Bekannt sind weiterhin Stromschienen aus Cuponal, einem Bi-Metallverbundwerkstoff. Dabei ist ein Kern aus Aluminium, mit einem Mantel aus Kupfer verpresst, um die positiven Eigenschaften von elektrisch hochleitfähigem Kupfer mit dem geringen Gewicht von Aluminium optimal zu kombinieren (CUPONAL - Verbundschiene CuAl, SPS Standard Produkte Schwanenmühle GmbH, http://www.sps-standard.com/fileadmin/user_upload/pdfs/070125-Cuponal-PDF.pdf).

Im Unterschied zu einer Stromschiene aus Cuponal sind bei der erfindungsgemäßen Stromschiene die Teilstücke quer zur Stromrichtung in Reihe aneinandergefügt. Hierdurch ist die Stromtragfähigkeit schon durch Austausch nur einer der Teilstücke veränderbar, ohne die gesamte Stromschiene ersetzen zu müssen.

Durch die beschriebene, im Wesentlichen rechteckige Hüllkontur der Querschnittsfläche der neuen Stromschiene kann diese in einem Schienenverteilersystem anstelle bekannter, aus einem Stück gefertigter Stromschienen unter Einhaltung wesentlicher Systemmerkmale eingesetzt werden. Derartige wesentliche Systemmerkmale sind beispielsweise die Breite der Stromschiene und die Position von Arbeitsflächen, die dem Zusammenwirken mit Verbindungseinrichtungen sowie mit Stütz- und Haltevorrichtungen dienen.

Die Teilstücke der erfindungsgemäßen modularen Stromschiene können auf fertigungstechnisch einfache Weise einander überlappend oder ineinander greifend zusammengefügt sein.

Bevorzugt sind als Strom leitende Materialien Aluminium, Kupfer oder Stahl vorgesehen.

Die Erfindung sowie vorteilhafte Ausführungsformen der Erfindung werden im Weiteren anhand der nachfolgenden Figuren beschrieben. Es zeigen:
- Figuren 1 bis 3: modulare Stromschienen einer ersten Baureihe, bei der die Teilstücke einander überlappend zusammengefügt sind,
- Figuren 4 bis 7: modulare Stromschienen einer zweiten Baureihe, bei der die Teilstücke ineinander greifend zusammengefügt sind
- Figuren 8 und 9: jeweils einen geraden Schienenkasten eines Schienenverteilersystems mit Stromschienen gemäß der Figur 4 und 5.

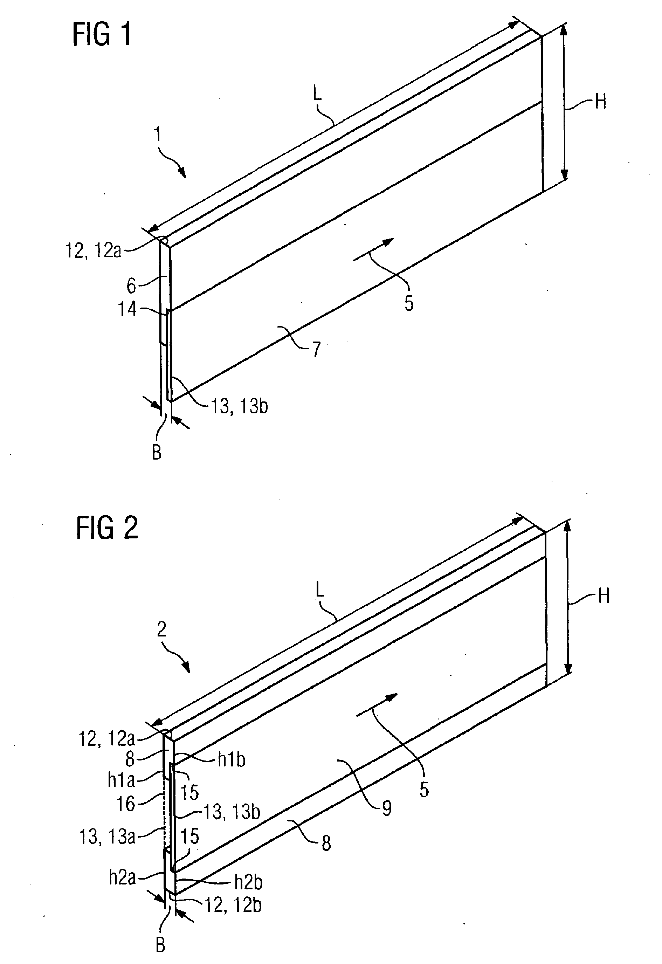

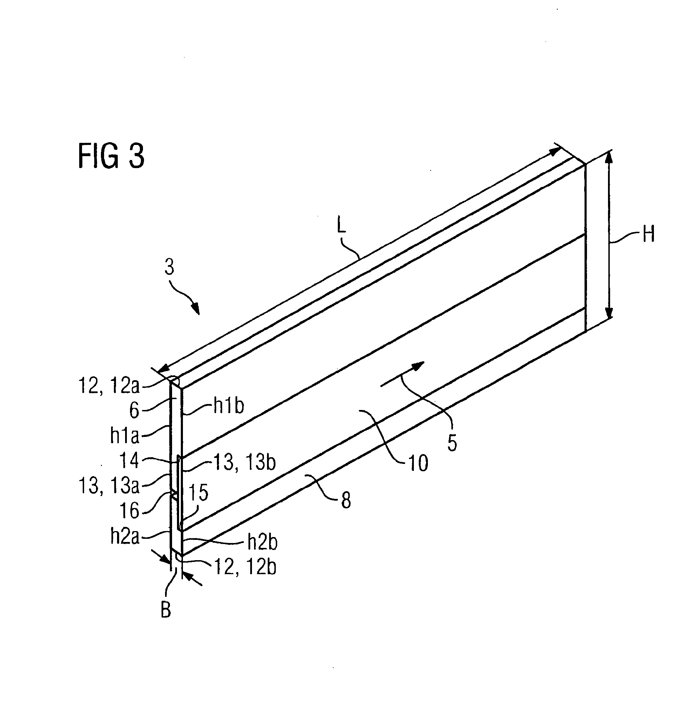

Die in den Figuren 1 bis 7 gezeigten Stromschienen 1 bis 3 einer ersten Baureihe sowie 101 bis 104 einer zweiten Baureihe sind modular aus separaten, als starre Profile ausgebildeten, quer zur Stromrichtung 5 bzw. 105 Strom leitend aneinander gefügten Teilstücken 6 bis 10 bzw. 106 bis 111 aufgebaut.

Die Stromschienen 2 uns 3 sowie 101 bis 104 weisen eine Querschnittsfläche A auf, deren Hüllkontur 16; 116 aus einem ersten Seitenpaar 12; 112 einander gegenüberliegender Seiten 12a, 12b; 112a, 112b einer die Breite B der Stromschiene bildenden ersten Seitenlänge und einem zweiten Seitenpaar 13; 113 einander gegenüberliegender Seiten 13a, 13b; 113a, 113b einer die Höhe H der Stromschiene bildenden zweiten Seitenlänge gebildet ist, wobei die Breite B der Stromschiene kürzer als die Höhe H der Stromschiene ist.

Dabei bildet ein sich in Stromrichtung 5; 105 im Wesentlichen über die gesamte Länge L der Stromschiene erstreckendes erstes 6; 8; 6; 106; 106; 109; 109 der Teilstücke eine erste Seite 12a; 112a des ersten Seitenpaares 12 und jeweils einen sich daran anschließenden ersten Abschnitt h1a, h1b der beiden Seiten 13a, 13b; 113a, 113b des zweiten Seitenpaares 13. Entsprechend bildet ein sich in Stromrichtung 5; 105 über die gesamte Länge L der Stromschiene erstreckendes zweites der Teilstücke 7; 8; 8; 107; 106; 110; 109 die zweite Seite 12b; 112b des ersten Seitenpaares 12 und jeweils einen sich daran anschließenden zweiten Abschnitt h2a, h2b der beiden Seiten 13a, 13b; 113a, 113b des zweiten Seitenpaares 13.

Das Zusammenfügen der Teilstücke kann dabei beispielsweise durch Schweißen oder Nieten erfolgen.

Von den als starre Profile ausgebildeten Teilstücken besteht bei jeder der Stromschienen der gezeigten Baureihen zumindest eines aus dem wesentlichen Werkstoff der Leiter des Schienenverteilersystems, in dem die jeweilige Stromschiene eingesetzt werden soll und wird daher hier im Weiteren als Stromleitprofil bezeichnet. So besteht also bei einem Schienenverteilersystem, bei dem der Werkstoff der Leiter im Wesentlichen Kupfer ist, das Stromleitprofil der erfindungsgemäßen Stromschiene aus Kupfer und bei einem Schienenverteilersystem, bei dem der Werkstoff der Leiter im Wesentlichen Aluminium ist, aus Aluminium.

Eines der als starres Profil ausgebildeten Teilstücke zumindest einer der Stromschienen der Baureihe, das im weiteren Trägerprofil bezeichnet wird und dessen wesentliche Funktion darin besteht, das bzw. die Stromleitprofile der Stromschienen der Baureihe in einer bestimmten Position zu fixieren und somit eine Veränderung der Systemmerkmale - wie beispielsweise der Breite B und der Höhe H der Stromschienen der Baureihe - zu vermeiden, besteht aus einem anderen, insbesondere kostengünstigerem Material als die Stromleitprofile.

Durch die Variation verschiedenartiger Querschnitte und Werkstoffe der Stromleit- und Trägerprofile ist mit einer geringen Anzahl an Stromleit- und Trägerprofilen (Halbzeugen) eine große Anzahl an Stromschienen mit unterschiedlichen Stromtragfähigkeiten innerhalb einer Baureihe abbildbar und somit sind die Kosten für Logistik und Herstellung der Stromschienen einer Baureihe deutlich senkbar.

Bei der in den Figuren 1 bis 3 gezeigten ersten Baureihe modularer, sich in ihrer Stromtragfähigkeit unterscheidender Stromschienen 1 bis 3, sind die Teilstücke einander überlappend zusammengefügt.

Hierzu weisen die Teilstücke 6 und 8, die Stromleitprofile bilden, jeweils einen Hinterschnitt 14 bzw. 15 auf, der von dem jeweiligen Teilstück 7; 9 bzw. 10 ausfüllt ist. Die Teilstücke 7; 9 bzw. 10 bilden dabei ein Trägerprofil oder aber auch ein tragendes Stromleitprofil und weisen die Form einer flachen Platte auf.

Die Querschnittsfläche A der Stromschienen 2 und 3 weist eine rechteckige Hüllkontur 16 auf, wobei die erste 12a und zweite 12b Seite jeweils eine kurze Seite (Schmalseite) und die Seiten 13a und 13b jeweils eine lange Seite (Längsseite) dieser Hüllkontur 16 bilden. Insbesondere die Seiten 12a und 12b können aber auch leicht tonnenförmig nach Außen gewölbt sein.

Unter der Hüllkontur 16 wird dabei eine gedachte Umfangskontur der Querschnittsfläche der Stromschiene verstanden, die erhalten wird, wenn die Querschnittsfläche von einem flexiblen Element eng anliegend umspannt wird.

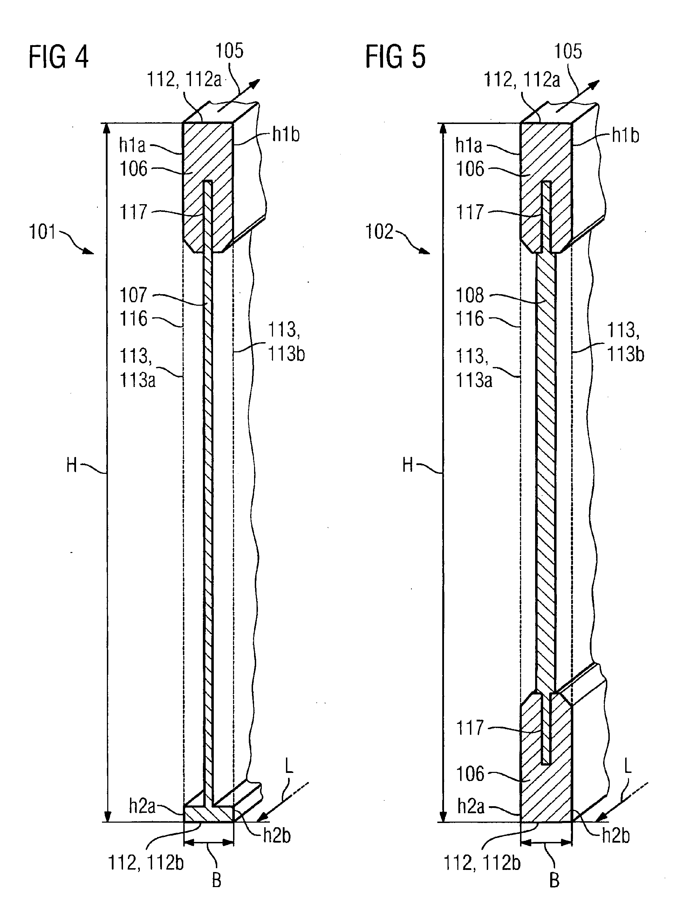

Im Unterschied hierzu sind bei der in den Figuren 4 bis 7 gezeigten zweiten Baureihe modularer, sich in ihrer Stromtrag-fähigkeit unterscheidender Stromschienen 101 bis 104 die Teilstücke 106 bis 111 ineinander greifend zusammengefügt.

Hierzu weisen die Teilstücke 106 und 109, die Stromleitprofile bilden, jeweils einen endseitig offenen Schlitz 117 bzw. 118 auf, in den das jeweilige Teilstück 107; 108; 110 bzw. 111 eingreift. Die Teilstücke 107; 108; 110 bzw. 111 bilden dabei auch hier ein Trägerprofil oder ein tragendes Stromleitprofil.

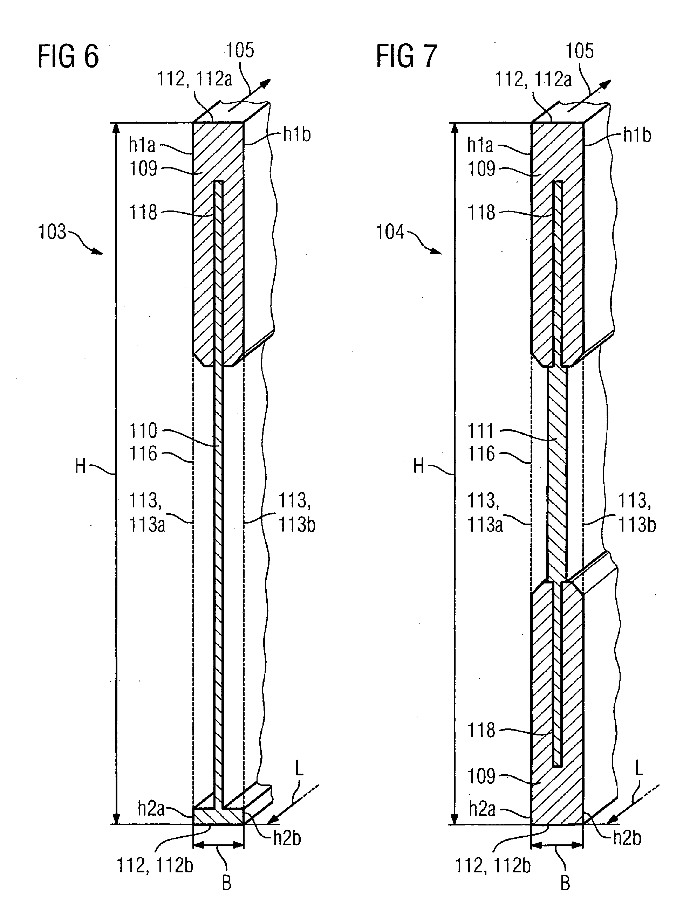

Dabei kann auch ein Teilstück, das ein Trägerprofil bildet, ein Endstück sein - sich also über die gesamte Länge der zweiten Seite 112b der Stromschiene erstrecken. Die in den Figuren 4 bzw. 6 gezeigten, jeweils als ein Endstück fungierende Teilstücke 107 bzw. 110, die jeweils ein Trägerprofil bilden können, sind dabei zur Einhaltung der vorgegebenen Breite B der Stromschiene 101 bzw. 103, T-förmig ausgebildet.

Ein Teilstück, das ein Trägerprofil bildet, kann aber auch ein Zwischenstück sein - also mit beiden Enden jeweils in einen der Schlitze 117 bzw. 118 eines der Stromleitprofile eingreifen. So fungieren die in den Figuren 5 und 7 gezeigten Teilstücke 108 und 111, die jeweils ein Trägerprofil bilden, als ein solches Zwischenstück.

In der nachfolgenden Tabelle sind beispielhafte Ausführungsvarianten der Stromschienen der zweiten Baureihe aufgelistet, die beispielhaft aus einer Auswahl aus den folgenden 16 Halbzeugen A bis P zusammenstellt sind:
- 1. Halbzeug A:: Teilstück 106 als Stromleitprofil aus Aluminium (Querschnittsfläche: 250mm²),
- 2. Halbzeug B:: Teilstück 106 als Stromleitprofil aus Kupfer (Querschnittsfläche 250mm²),
- 3. Halbzeug C:: Teilstück 107 als tragendes Stromleitprofil aus Aluminium (Querschnittsfläche 240mm²),
- 4. Halbzeug D:: Teilstück 107 als tragendes Stromleitprofil aus Kupfer (Querschnittsfläche 240mm²),
- 5. Halbzeug E:: Teilstück 107 als Trägerprofil aus Stahl (Querschnittsfläche 240mm²),
- 6. Halbzeug F:: Teilstück 108 als tragendes Stromleitprofil aus Aluminium (Querschnittsfläche 250mm²),
- 7. Halbzeug G:: Teilstück 108 als tragendes Stromleitprofil aus Kupfer
(Querschnittsfläche 250mm²),
- 8. Halbzeug H:: Teilstück 108 als Trägerprofil aus Stahl (Querschnittsfläche 250mm²),
- 9. Halbzeug I:: Teilstück 109 als Stromleitprofil aus Aluminium (Querschnittsfläche 400mm²),
- 10. Halbzeug J:: Teilstück 109 als Stromleitprofil aus Kupfer (Querschnittsfläche 400mm²),
- 11. Halbzeug K:: Teilstück 110 als tragendes Stromleitprofil aus Aluminium (Querschnittsfläche 440mm²),
- 12. Halbzeug L:: Teilstück 110 als tragendes Stromleitprofil aus Kupfer (Querschnittsfläche 440mm²),
- 13. Halbzeug M:: Teilstück 110 als Trägerprofil aus Stahl (Querschnittsfläche 440mm²),
- 14. Halbzeug N:: Teilstück 111 als tragendes Stromleitprofil aus Aluminium (Querschnittsfläche 440mm²),
- 15. Halbzeug O:: Teilstück 111 als tragendes Stromleitprofil aus Kupfer (Querschnittsfläche 440mm²) und
- 16. Halbzeug P:: Teilstück 111 als Trägerprofil aus Stahl (Querschnittsfläche 440mm²).

| A | B | C | D | E | F | G | H | I | J | K | L | M | N | O | P | Gesamtquerschnitt der Stromleitprofile in mm² |
|---|---|---|---|---|---|---|---|---|---|---|---|---|---|---|---|---|
| 1x | | | | 1x | | | | | | | | | | | | 250 |
| 1x | | 1x | | | | | | | | | | | | | | 490 |
| | 1x | | | 1x | | | | | | | | | | | | 250 |
| | 1x | | 1x | | | | | | | | | | | | | 490 |
| 2x | | | | | | | 1x | | | | | | | | | 500 |
| 2x | | | | | 1x | | | | | | | | | | | 750 |
| | 2x | | | | | | 1x | | | | | | | | | 500 |
| | 2x | | | | | 1x | | | | | | | | | | 750 |
| | | | | | | | | 1x | | | | 1x | | | | 400 |
| | | | | | | | | 1x | | 1x | | | | | | 840 |
| | | | | | | | | | 1x | | | 1x | | | | 400 |
| | | | | | | | | | 1x | | 1x | | | | | 840 |
| | | | | | | | | 2x | | | | | | | 1x | 800 |
| | | | | | | | | 2x | | | | | 1x | | | 1240 |
| | | | | | | | | | 2x | | | | | | 1x | 800 |
| | | | | | | | | | 2x | | | | | 1x | | 1240 |

Auch die Querschnittsfläche A der in den Figuren 4 bis 7 gezeigten Stromschienen 101 bis 104 weist jeweils eine rechteckige Hüllkontur 116 auf. Die Breite dieser Hüllkontur 16 beträgt bei allen Stromschienen dieser zweiten Baureihe jeweils 10mm und bildet zugleich die Breite B der Stromschienen der zweiten Baureihe. Die Höhe der gezeigten Stromschienen der zweiten Baureihe beträgt jeweils 150mm. Auch bei diesen Stromschienen bilden die erste 112a und zweite 112b Seite jeweils eine Schmalseite der Hüllkontur 116.

Insbesondere die Einhaltung der Breite B der Stromschienen und der Lage der ersten h1a, h1b und zweiten h2a, h2b Abschnitt innerhalb einer Baureihe gestattet es, alle Stromschienen dieser Baureihe mit einheitlichen Verbindungseinrichtungen (wie sie beispielsweise aus der Druckschrift DE 42 25 837 C2 bekannt sind) zu verbinden bzw. durch einheitliche Stütz- und Haltevorrichtungen (wie sie beispielsweise aus der Druckschrift EP 0 530 521 B1 bekannt sind) zu halten und zu stützen.

Als Strom leitendes Material der Teilstücke 106 und 109 ist Aluminium oder Kupfer vorgesehen - diese Teilstücke bilden Stromleitprofile. Als Strom leitendes Material der Teilstücke 107, 108, 110 und 111 ist Aluminium oder Kupfer oder Stahl vorgesehen - diese bilden also Stromleit- oder Trägerprofile.

Soll eine weitere Baureihe mit Stromschienen zusammengestellt werden, die eine andere Breite B oder eine andere Höhe H aufweisen, so müssen weitere Halbzeuge bereitgestellt werden.

So könnten bei einer dritten Baureihe, alle Stromschienen eine Breite von 6mm aufweisen.

In der nachfolgenden Tabelle sind beispielhafte Ausführungsvarianten der Stromschienen der dritten Baureihe aufgelistet. Diese Ausführungsvarianten sind beispielhaft aus einer Auswahl aus den folgenden 16 Halbzeugen Q bis Z zusammenstellt, wobei die Teilstücke, die Stromleitprofile bilden, auch hier bei jeder der Stromschienen dieser Baureihe entweder alle aus Kupfer oder alle aus Aluminium bestehen:
- 1. Halbzeug Q:: Stromleitprofil (Querschnittsfläche: 160mm²),
- 2. Halbzeug R:: Stromleitprofil (Querschnittsfläche 360mm²),
- 3. Halbzeug S:: Stromleitprofil (Querschnittsfläche 600mm²),
- 4. Halbzeug T:: Stromleitprofil (Querschnittsfläche 1200mm²),
- 5. Halbzeug U:: tragendes Stromleitprofil (Querschnittsfläche 40mm²),
- 6. Halbzeug V:: tragendes Stromleitprofil (Querschnittsfläche 80mm²),
- 7. Halbzeug W:: tragendes Stromleitprofil (Querschnittsfläche 90mm²),
- 8. Halbzeug X:: tragendes Stromleitprofil (Querschnittsfläche 240mm²),
- 9. Halbzeug Y:: Trägerprofil aus Stahl, das ein Endstück bildet und
- 10. Halbzeug Z:: Trägerprofil aus Stahl, das ein Zwischenstück bildet.

| Q | R | S | T | U | V | W | X | Y | Z | Gesamtquerschnitt der Stromleit-profile in mm² |
|---|---|---|---|---|---|---|---|---|---|---|
| 1x | | | | | | | | 1x | | 160 |
| 1x | | | | 1x | | | | | | 200 |
| 1x | | | | | | 1x | | | | 250 |
| 2x | | | | | | | | | 1x | 320 |
| 2x | | | | | 1x | | | | | 400 |
| | | 1x | | | | | | | | 600 |
| | 2x | | | | | | | | 1x | 720 |
| | 2x | | | | 1x | | | | | 800 |
| | 2x | | | | | | 1x | | | 960 |
| | | | 1x | | | | | | | 1200 |

Gegebenenfalls können die Stromschienen, die eine Hauptstrombahn bilden, auch aus zwei oder mehr separaten Teilschienen bestehen, so dass auch Gesamtquerschnitte der Hauptstrombahnen von beispielsweise 1600mm² (zwei mal 800mm²), 1920mm² (zwei mal 960mm²) oder 2400mm² (zwei mal 1200mm²) gebildet werden können.

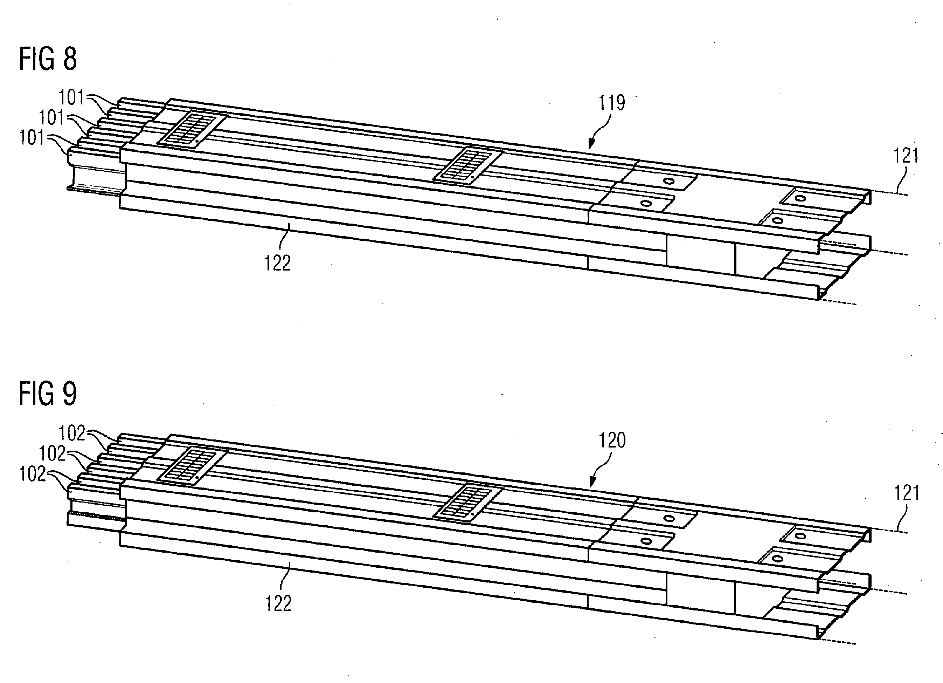

Die Figuren 8 und 9 zeigen beispielhaft Schienekästen 119, 120 als Teil eines Schienenverteilersystems 121, bei dem die langgestreckten modularen Stromschienen 101 bzw. 102 der zweiten Baugruppe, die Hauptstrombahnen bilden, flach nebeneinander in einem Schienengehäuse 122 gekapselt angeordnet sind.

## Patentansprüche

1. Modulare Stromschiene (2; 3; 101; 102; 103; 104), die aus separaten, als starre Profile ausgebildeten, quer zur Stromrichtung Strom leitend aneinander gefügten Teilstücken (8, 9, 8; 6, 10, 8; 106, 107,; 106, 108, 106; 109, 110; 109, 111, 109) besteht, von denen zwei (8, 9; 6, 10; 106, 107; 106, 108; 109, 110; 109, 111) aus unterschiedlichen Strom leitenden Materialien bestehen,
- mit einer Querschnittsfläche (A) deren Hüllkontur (16; 116) aus einem ersten Seitenpaar (12; 112) einander gegenüberliegender Seiten (12a, 12b; 112a, 112b) einer die Breite (B) der Stromschiene bildenden ersten Seitenlänge und einem zweiten Seitenpaar (13; 113) einander gegenüberliegender Seiten (13a, 13b; 11.3a, 113b) einer die Höhe (H) der Stromschiene bildenden zweiten Seitenlänge gebildet ist, wobei die Breite (B) der Stromschiene kürzer als die Höhe (H) der Stromschiene ist,
- bei der ein sich in Stromrichtung (5; 105) im Wesentlichen über die gesamte Länge (L) der Stromschiene erstreckendes erstes (6; 8; 6; 106; 106; 109; 109) der Teilstücke eine erste Seite (12a; 112a) des ersten Seitenpaares (12) und jeweils einen sich daran anschließenden ersten Abschnitt (h1a, h1b) der beiden Seiten (13a, 13b; 113a, 113b) des zweiten Seitenpaares (13) bildet,
**dadurch gekennzeichnet,dass**
ein sich in Stromrichtung (5; 105) über die gesamte Länge (L) der Stromschiene erstreckendes zweites der Teilstücke (7; 8; 8; 107; 106; 110; 109) die zweite Seite (12b; 112b) des ersten Seitenpaares (12) und jeweils einen sich daran anschließenden zweiten Abschnitt (h2a, h2b) der beiden Seiten (13a, 13b; 113a, 113b) des zweiten Seitenpaares (13) bildet.

2. Modulare Stromschiene (2; 3; 101; 102; 103; 104) nach Anspruche 1,
**dadurch gekennzeichnet, dass**
die beiden Seiten (13a, 13b; 113a, 113b) des zweiten Seitenpaares, die die Höhe der Stromschiene bilden, geradlinig und parallel zueinander verlaufen.

3. Modulare Stromschiene (2; 3; 101; 102; 103; 104) nach einem der Ansprüche 1 oder 2,
**dadurch gekennzeichnet, dass**
die Teilstücke (8, 9, 8; 6, 10, 8; 106, 107; 106, 108, 106; 109, 110; 109, 111, 109) einander überlappend oder ineinander greifend zusammengefügt sind.

4. Modulare Stromschiene (1; 2; 3; 101; 102; 103; 104) nach einem der Ansprüche 1 bis 3,
**dadurch gekennzeichnet,**
als Strom leitende Materialien Aluminium, Kupfer oder Stahl vorgesehen sind.

5. Schienenverteilersystem (121;221) mit langgestreckten, in einem Schienengehäuse (122; 122) flach nebeneinander angeordneten Stromschienen (101; 102) die Hauptstrombahnen bilden,
**dadurch gekennzeichnet, dass**
die Stromschienen (101; 102) als modulare Stromschienen nach einem der Ansprüche 1 bis 4 ausgebildet sind.

6. Baureihe modularer, sich in ihrer Stromtragfähigkeit unterscheidender Stromschienen (1; 2; 3; 101; 102; 103; 104)
**dadurch gekennzeichnet, dass**
zumindest zwei der Stromschienen (2, 3; 101, 102, 103, 104) der Baureihe nach einem der Ansprüche 1 bis 4 ausgebildet sind.

7. Baureihe modularer, sich in ihrer Stromtragfähigkeit unterscheidender Stromschienen nach Anspruch 6,
**dadurch gekennzeichnet, dass**
alle Stromschienen (1, 2, 3; 101; 102; 103; 104) der Baureihe die gleiche Breite (B) aufweisen.

## Claims

1. Modular busbar (2; 3; 101; 102; 103; 104), consisting of separate parts (8, 9, 8; 6, 10, 8; 106, 107,; 106, 108, 106; 109, 110; 109, 111, 109) embodied as rigid profiles joined to one another conducting current transverse to the current direction, of which two (8, 9; 6, 10; 106, 107; 106, 108; 109, 110; 109, 111) consist of different current-conducting materials,
- with a cross-sectional surface (A) of which the envelope contour (16; 116) is formed from a first pair of sides (12; 112) of opposing sides (12a, 12b; 112a, 112b) of a first side length forming the breadth (B) of the busbar and a second pair of sides (13; 113) of opposing sides (13a, 13b; 11.3a, 113b) of a second side length forming the height (H) of the busbar, wherein the breadth (B) of the busbar is shorter than the height (H) of the busbar,
- in which a first (6; 8; 6; 106; 106; 109; 109) of the parts, essentially extending in the current direction (5; 105) over the entire length (L) of the busbar, forms a first side (12a; 112a) of the first pair of sides (12) and a first section (h1a, h1b) adjoining said side of the two sides (13a, 13b; 113a, 113b) of the second pair of sides (13) in each case,
**characterised in that**
a second of the parts (7; 8; 8; 107; 106; 110; 109), extending in the current direction (5; 105) over the entire length (L) of the busbar, forms the second side (12b; 112b) of the first pair of sides (12) and a second section (h2a, h2b) adjoining said side in each case of the two sides (13a, 13b; 113a, 113b) of the second pair of sides (13).

2. Modular busbar (2; 3; 101; 102; 103; 104) according to claim 1,
**characterised in that**
the two sides (13a, 13b; 113a, 113b) of the second pair of sides which form the height of the busbar run in a straight line and in parallel to one another.

3. Modular busbar (2; 3; 101; 102; 103; 104) according to one of claims 1 or 2,
**characterised in that**
the part sections (8, 9, 8; 6, 10, 8; 106, 107; 106, 108, 106; 109, 110; 109, 111, 109) are joined together to overlap with one another or to engage in one another.

4. Modular busbar (1; 2; 3; 101; 102; 103; 104) according to one of claims 1 to 3,
**characterised in that**
aluminium, copper or steel are provided as current-conducting materials.

5. Busbar distribution system (121; 221) with elongated busbars (101; 102) arranged in a planar fashion in a bar housing (122; 122) next to one another which form main current paths,
**characterised in that**
the busbars (101; 102) are embodied as modular busbars according to one of claims 1 to 4.

6. Series of modular busbars (1; 2; 3; 101; 102; 103; 104) differing in their current-carrying capability
**characterised in that**
at least two of the busbars (2, 3; 101, 102, 103, 104) of the series are embodied according to one of claims 1 to 4.

7. Series of modular busbars differing in their current-carrying capability according to claim 6,
**characterised in that**
all busbars (1, 2, 3; 101; 102; 103; 104) of the series have the same breadth (B).

## Revendications

1. Barre (2 ; 3 ; 101 ; 102 ; 103 ; 104) omnibus modulaire, qui est constituée de pièces (8, 9, 8 ; 6, 10, 8 ; 106, 107 ; 106, 108, 106 ; 109, 110 ; 109, 111, 109) partielles, distinctes, constituées sous forme de profilés rigides, aboutées les unes aux autres, d'une manière conductrice du courant, transversalement à la direction du courant, dont deux (8, 9 ; 6, 10 ; 106, 107 ; 106, 108 ; 109, 110 ; 109, 111) sont en des matériaux conducteurs du courant différents,
- ayant une surface (A) de section transversale, dont le contour (16 ; 116) d'enveloppe est formé d'une première paire (12 ; 112) de côtés (12a, 12b ; 112a, 112b) opposés l'un à l'autre d'une première longueur de côté formant la largeur (B) de la barre omnibus et d'une deuxième paire (13 ; 113) de côtés (13a, 13b ; 113a, 113b) opposés l'un à l'autre d'une deuxième longueur de côté formant la hauteur (H) de la barre omnibus, la largeur (B) de la barre omnibus étant plus courte que la hauteur (H) de la barre omnibus,
dans laquelle une première (6 ; 8 ; 6 ; 106 ; 106 ; 109 ; 109) des pièces partielles, s'étendant sensiblement dans la direction (5 ; 105) du courant sur toute la longueur (L) de la barre omnibus, forme un premier côté (12a ; 112a) de la première paire (12) de côtés et respectivement une première partie (h1a, h1b) s'y raccordant des deux côtés (13a, 13b ; 113a, 113b) de la deuxième paire (13) de côtés,
**caractérisée en ce qu'**une deuxième des pièces (7 ; 8 ; 8 ; 107 ; 106 ; 110 ; 109) partielles, s'étendant dans la direction (5 ; 105) du courant sur toute la longueur (L) de la barre omnibus, forme le deuxième côté (12b ; 112b) de la première paire (12) de côtés et respectivement une deuxième partie (h2a, h2b) s'y raccordant des deux côtés (13a, 13b ; 113a, 113b) de la deuxième paire (13) de côtés.

2. Barre (2 ; 3 ; 101 ; 102 ; 103 ; 104) omnibus modulaire suivant la revendication 1,
**caractérisée en ce que**
les deux côtés (13a, 13b ; 113a, 113b) de la deuxième paire de côtés, qui forment la hauteur de la barre omnibus, s'étendent en ligne droite et parallèlement entre eux.

3. Barre (2 ; 3 ; 101 ; 102 ; 103 ; 104) omnibus modulaire suivant l'une des revendications 1 ou 2,
**caractérisée en ce que**
les pièces (8, 9, 8 ; 6, 10, 8 ; 106, 107 ; 106, 108, 106 ; 109, 110 ; 109, 111, 109) partielles se chevauchent les unes les autres ou sont assemblées en pénétrant les unes dans les autres.

4. Barre (1 ; 2 ; 3 ; 101 ; 102 ; 103 ; 104) omnibus modulaire suivant l'une des revendications 1 à 3,
**caractérisée en ce que**
de l'aluminium, du cuivre ou de l'acier sont prévus comme matériaux conducteurs du courant.

5. Système (121 ; 221) répartiteur à barre ayant des barres (101 ; 102) omnibus, disposées à plat les unes à côté des autres dans un boîtier (122 ; 122) de barres, qui forment les voies principales du courant,
**caractérisé en ce que**
les barres (101 ; 102) omnibus sont constituées sous la forme de barre omnibus modulaire suivant l'une des revendications 1 à 4.

6. Rangée de barres (1 ; 2 ; 3 ; 101 ; 102 ; 103 ; 104) omnibus, se différenciant par leur aptitude à porter le courant,
**caractérisée en ce qu'**au moins deux des barres (2, 3 ; 101, 102, 103, 104) omnibus de la rangée sont constituées suivant l'une des revendications 1 à 4.

7. Rangée de barres omnibus, se différenciant par leur aptitude à porter le courant suivant la revendication 6,
**caractérisée en ce que** toutes les barres (1, 2, 3 ; 101 ; 102 ; 103 ; 104) omnibus de la rangée ont la même largeur (B).
